## Europäisches Patentamt

## European Patent Office

## Office européen des brevets

(19)

(11) Veröffentlichungsnummer: **0 121 282**
**B1**

(12) **EUROPÄISCHE PATENTSCHRIFT**

(45) Veröffentlichungstag der Patentschrift:
**10.06.87**

(51) Int. Cl.⁴: **G 11 B 15/02, G 11 B 15/44**

(21) Anmeldenummer: **84200447.5**

(22) Anmeldetag: **28.03.84**

(54) **Schaltvorrichtung für ein Magnetbandkassettengerät für das Überleiten von einer Betriebsfunktion in eine andere.**

(30) Priorität: **02.04.83 DE 3312135**
**11.04.83 NL 8301266**

(43) Veröffentlichungstag der Anmeldung:
**10.10.84 Patentblatt 84/41**

(45) Bekanntmachung des Hinweises auf die Patenterteilung:
**10.06.87 Patentblatt 87/24**

(84) Benannte Vertragsstaaten:
**BE CH DE FR GB IT LI**

(56) Entgegenhaltungen:
**EP-A-0 095 815**
**DE-A-2 524 219**
**GB-A-2 060 237**
**US-A-3 563 493**
**US-A-3 620 429**
**US-A-3 759 464**
**US-A-4 159 492**
**US-A-4 269 373**
**US-A-4 329 720**

(73) Patentinhaber: **Philips Patentverwaltung GmbH, Billstrasse 80, D-2000 Hamburg 28 (DE)**
(84) Benannte Vertragsstaaten: **DE**

(73) Patentinhaber: **N.V. Philips' Gloeilampenfabrieken, Groenewoudseweg 1, NL- 5621 BA Eindhoven (NL)**
(84) Benannte Vertragsstaaten: **BE CH FR GB IT LI**

(72) Erfinder: **Deutsch, Armin, Berliner Ring 109, D-6330 Wetzlar (DE)**
Erfinder: **Ruyten, Henricus, M. Volpertshäuser Strasse 14, D-6330 Wetzlar (DE)**

(74) Vertreter: **Kupfermann, Fritz- Joachim, Philips Patentverwaltung GmbH Billstrasse 80 Postfach 10 51 49, D-2000 Hamburg 28 (DE)**

## Beschreibung

Die Erfindung bezieht sich auf eine Schaltvorrichtung für ein Magnetbandkassengerät für das Überleiten von einer Betriebsfunktion in eine andere bei Bandstillstand mit einer zur Kassette hin verstellbaren Kopfplatte und einem Schaltmechanismus, bestehend aus

- einem bei eingeschaltetem Gerät ständig angetriebenen Schaltrad, das ein Schaltelement steuert,
- einem Detektionsorgan, welches mit wenigstens einem Wickeldorn gekuppelt ist und die Lage des Schaltelementes am Schaltrad bei Bandlauf steuert,
- einer Steuerkurve auf dem Schaltrad, die bei Bandstillstand das Schaltelement verstellt, und
- einem Verbindungselement, das vom Schaltelement bei Bandstillstand immer in der gleichen Richtung verstellt wird zum Überführen des Gerätes in eine andere Betriebsfunktion.

Aus der DE-OS 25 24 219 ist eine derartige Schaltvorrichtung bekannt. Der Schaltmechanismus beaufschlagt dabei über das Schaltelement ein als Verriegelungsschieber ausgebildetes Verbindungselement, das nur dazu dient, den Tastenmechanismus zu entriegeln. Damit ist der Schaltmechanismus nur in der Lage, das Laufwerk bei Bandstillstand anzuhalten. Die Kopfplatte ist bei diesem Entriegelungsvorgang ebenfalls zurückgefahren von der Kassette weg. Der Schaltmechanismus ist jedoch nicht in der Lage, beim Einschalten die Kopfplatte wieder einzufahren und das Gerät damit wieder in Betrieb zu setzen.

Es ist Aufgabe der Erfindung, eine Schaltvorrichtung zu schaffen, die es ermöglicht, über das Schalt- und das Verbindungselement sowohl den Abschalt- als auch den Einschaltvorgang zu vollziehen unter Einsparung von aufwendigen Servomechanismen, wobei die Schaltvorgänge alle von einem im Betrieb ständig in einer Richtung angetriebenen Schaltrad abgeleitet werden.

Die gestellte Aufgabe ist erfindungsgemäß dadurch gelöst, daß

- das Verbindungselement mit der Kopfplatte kuppelbar ist zum Verstellen der Kopfplatte,
- ein Rastmechanismus die Kopfplatte in wenigstens einer auf die Kassette verstellten Lage verrastet,
- das Verbindungselement beim vom Schaltelement gesteuerten erneuten Verstellen den gerasteten Rastmechanismus entrastet und
- durch das Entrasten die Kopfplatte aus der auf die Kassette verstellten Stellung zurückfährt.

Durch das Einführen des Rastmechanismus wird es möglich, durch das Verstellen des Verbindungselementes über ein Schaltelement immer in der gleichen Richtung sowohl Ein- als auch Ausschaltfunktionen immer in der gleichen Weise vorzunehmen. Da das Verbindungselement gleichzeitig die Verschiebung der Kopfplatte vornimmt, sowohl auf die Kassette zu als auch von der Kassette weg, kann über diese einfache Schaltvorrichtung sowohl das Inbetriebsetzen als auch Abschalten auf einfache Weise vorgenommen werden.

Nach einer weiteren Ausgestaltung der Erfindung ist vorgesehen, daß das Verbindungselement federnd elastisch auf die Kopfplatte einwirkt und damit beim aufs Neue Verstellen in einem Überhub aus der gerasteten Stellung in Richtung auf die vorgefahrene Kopfplatte weiter vorfahrbar ist und dabei im Rastmechanismus entrastet. Durch die federnd elastische Verbindung zwischen dem Verbindungselement und der Kopfplatte wird es möglich, daß das immer nur in einer Richtung arbeitende Verbindungselement einen Überhub ausführen kann, der für das Entrasten des Rastmechanismus erforderlich ist, ohne daß die Kopfplatte das Entrasten verhindert oder irgendwie an dem Vorgang beteiligt ist, obwohl Verbindungselement und Kopfplatte im übrigen stets zusammenarbeiten.

Nach einer weiteren Ausgestaltung der Erfindung ist vorgesehen, daß der Rastmechanismus aus einer Herzkurve, einem Führungsnocken gegenüber der Herzmulde und einem die Herzkurve abfahrenden Stift besteht, wobei die Herzkurve und der Führungsnocken an dem Verbindungselement angeordnet sind und der Stift derart gegenüber dem Gestell gelagert ist, daß er einerseits in der Ebene der Herzkurve bewegbar ist und andererseits aus dem Eingriffsbereich mit der Herzkurve herausfahrbar ist. Auf diese Weise wird ein Rastmechanismus geschaffen, der unwirksam gemacht werden kann, wenn er bei einem Betriebsvorgang störend werden kann.

Nach einer weiteren Ausgestaltung der Erfindung ist vorgesehen, daß ein Rasthebel am Gestell schwenkbar gelagert ist und einen weiteren Stift trägt, der in einer Steuerkulisse einer Stoptastenstange vorgesehen und über die Steuerkulisse verschwenkt wird, wodurch der erste Stift aus dem Wirkbereich mit der Herzkurve herausschwenkt. Auf diese Weise wird der Rastmechanismus immer dann automatisch unwirksam gemacht, wenn die Stoptastenstange eingedrückt wird. Die Stoptastenstange kann zugleich auch eine Kombinationswirkung aufweisen, indem sie nämlich auch gleichzeitig dem Auswerfen der Kassette dient.

Nach einer weiteren Ausgestaltung der Erfindung ist schließlich vorgesehen, daß

- ein elektrischer Ein/Ausschalter für Antrieb des Laufwerkes im Gestell entgegen Federkraft verschiebbar gelagert ist,
- auf der Stoptastenstange und der Kopfplatte Schaltstücke vorgesehen sind, die die Kontakte des Schalters zum Öffnen des Stromkreises auseinanderdrücken, wenn die Stoptastenstange eingefahren wird und/oder wenn die Kopfplatte von der Kassette weg zurückgefahren wird,
- die Stoptastenstange einen Nocken trägt, der bei ihrem Einschieben den Schalter in Einschubrichtung verschiebt, und zwar derart, daß die Kontakte des Schalters aus dem Wirkungsbereich des Schaltstückes der Kopfplatte herausgekommen sind, und
- die Kopfplatte einen Nocken aufweist, der bei zurückgeschobenem Schalter und zurückgefahrener Kopfplatte den Schalter in seiner verschobenen Stellung festhält, bis die Kopfplatte wieder vorfährt.

Damit wird erreicht, daß beim Einbringen einer Kassette und noch ausgefahrener Kopfplatte der Antrieb in Gang gesetzt wird, so daß der Schaltmechanismus arbeiten und die Kopfplatte einfahren kann.

Die Erfindung wird anhand der in der Zeichnung dargestellten Ausführungsbeispiele näher erläutert. Es zeigen:

Fig. 1 eine Ansicht des Magnetbandkassettengerätes von der Antriebsseite her,

Fig. 2A eine schaubildliche vergrößerte Darstellung eines Rastmechanismus des Gerätes in einer ersten Lage,

Fig. 2B den Rastmechanismus nach Fig. 2A in einer zweiten Lage,

Fig. 3 das Magnetbandkassettengerät von der Tonkopfseite her gesehen in einer Spielstellung einer Bandlaufrichtung,

Fig. 4 das Magnetbandkassettengerät von der Tonkopfseite her gesehen in einer zu Fig. 3 entgegengesetzten Bandtransportrichtung,

Fig. 5 das Zusammenwirken einer Leitschlitzanordnung mit Steuermitteln und Kopfplatte in einer Explosionsdarstellung,

Fig. 6 die verschiedenen Lagen einer Steuerplatte zur Steuerung der Leitschlitzanordnung und der Kopfplatte,

Fig. 7 eine schaubildliche Darstellung von Steuerplatte und mit ihr zusamenwirkender Stoptaste zur Vorgabe einer Vorzugsbandlaufrichtung,

Fig. 8 eine zweite Ausführungsform der Leitschlitzanordnung und der Steuermittel für das Verschwenken der Kopfplatte,

Fig. 9 eine Ansicht des Magnetbandkassettengerätes von der Tonkopfseite her mit einer anderen Ausführungsform des Magnetbandkassettengerätes,

Fig. 10 eine vergrößerte Darstellung des Ein- und Ausschaltmechanismus der Vorrichtung des Gerätes nach Fig. 9 in verschiedenen Stellungen.

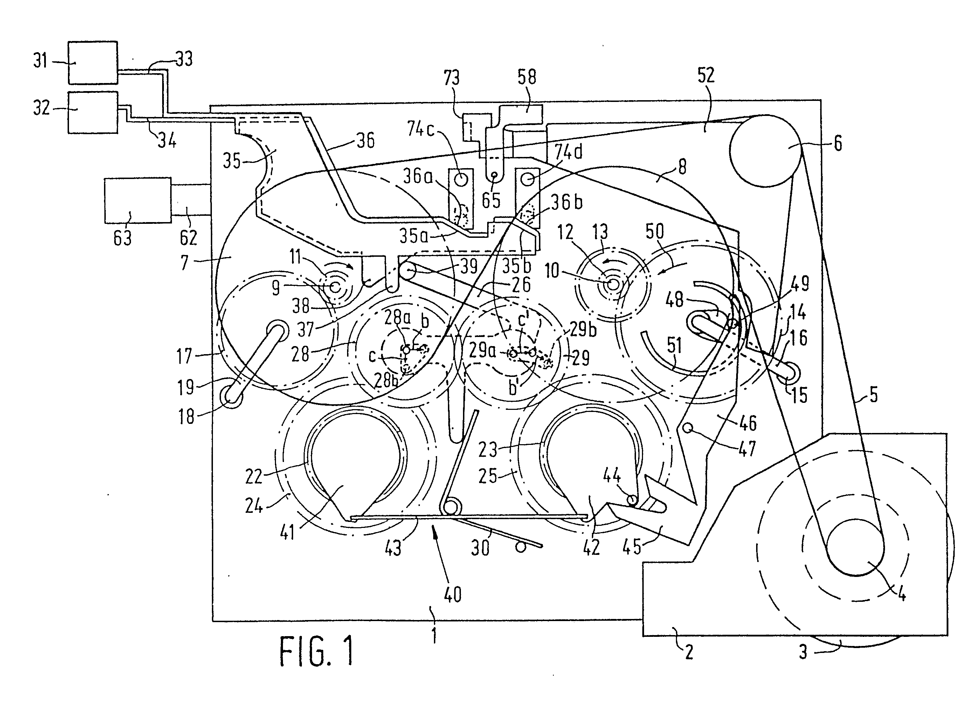

Das Magnetbandkassettengerät nach der Erfindung, wie in Fig. 1 dargestellt, weist ein Gestell 1 auf, das über eine Stütze 2 einen nur in einer Richtung umlaufenden Antriebsmotor 3 trägt. Das Abriebsritzel 4 des Motors 3 führt eine Peese 5, die über eine Umlenkrolle 6 über Schwungräder 7 und 8 derart geführt ist, daß die Schwungräder gegensinnig drehen. Die Schwungräder 7 und 8 sind im Gestell 1 gelagert. Die Schwungscheibe 7 ist fest verbunden mit einer Tonwelle 9, und die Schwungscheibe 8 ist fest verbunden mit einer Tonwelle 10. Weiterhin ist die Schwungscheibe 7 mit einem Zahnrad 11 verbunden; und die Schwungscheibe 8 ist mit einem Zahnrad 12 verbunden. Über eine Rutschkupplung ist koaxial zu dem Zahnrad 12 ein weiteres Zahnrad 13 auf der Schwungscheibe 8 drehbar angeordnet. Mit dem Zahnrad 12 auf der Schwungscheibe 8 ist ständig kämmend ein als Zahnrad ausgebildetes Schaltrad 14 in Einriff. Dieses Zahnrad 14 ist schwenkbar um eine Achse 15. Die Achse 15 trägt einen in Fig. 1 schematisch dargestellten Schwenkarm 16, auf dem drehbar das Schaltrad 14 gelagert ist. In ähnlicher Weise kämmt mit dem Zahnrad 11 ständig ein Zahnrad 17. Dieses Zahnrad 17 ist drehbar um eine Schwenkachse 18 mittels eines schematisch dargestellten Schwenkarmes 19.

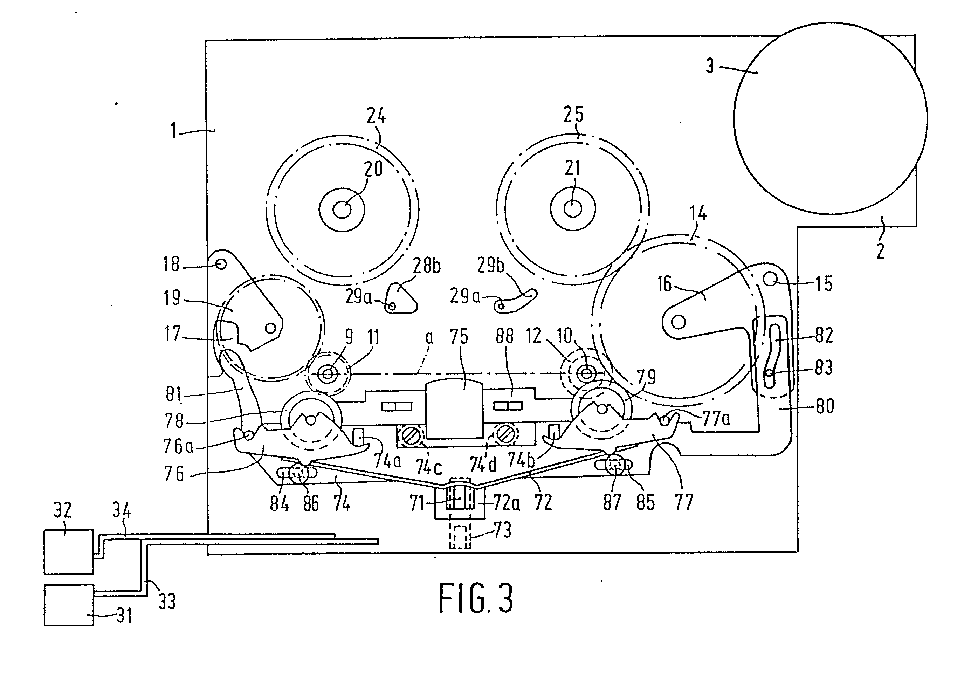

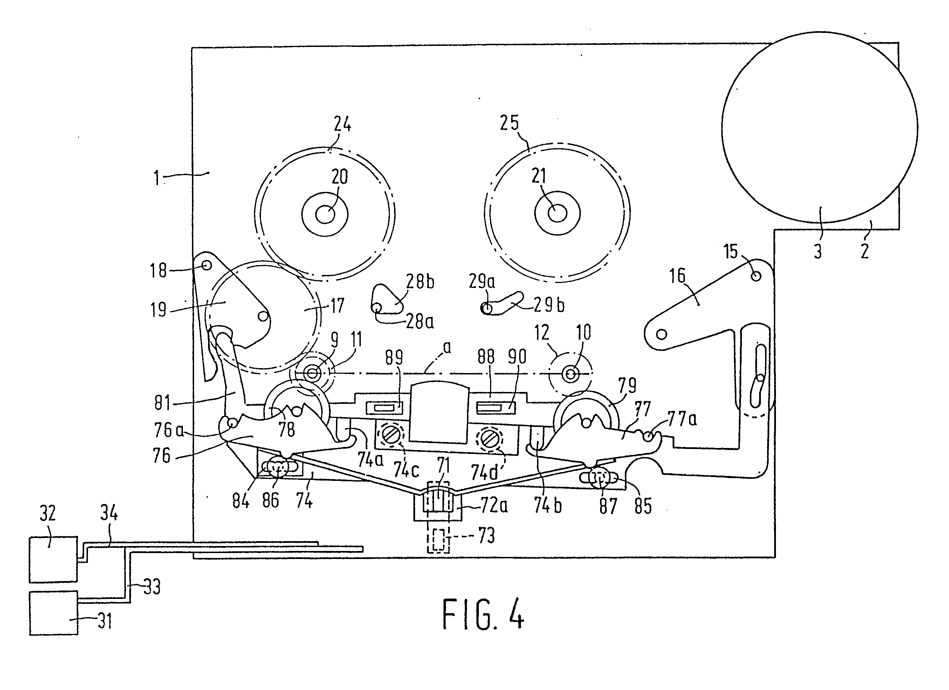

Wie auch in Fig. 3 und 4 dargestellt, sind drehbar im Gestell 1 Wickeldorne 20 und 21 gelagert. Diese Wickeldorne 20 und 21 sind fest verbunden mit Schnellspulrädern 22, 23. Über Rutschkupplungen sind mit den Wickeldornen 20, 21 Spielräder 24, 25 verbunden.

In Fig. 3 ist dargestellt, wie das Spielrad 25 über das Schaltrad 14 von dem Zahnrad 12 angetrieben wird. In Fig. 4 ist auf ähnliche Weise zu sehen, wie das Spielrad 24 über das Zahnrad 17 vom Zahnrad 11 angetrieben wird.

Ein Bügel 26, der verschiebbar im Gestell 1 gelagert ist, trägt nebeneinander zwei Zahnräder 28, 29 (siehe Fig. 1). Eine Feder 30 drückt den Bügel 26 immer in eine in Fig. 1 dargestellte Ausgangsposition.

Der Bügel 26 trägt zwei Stifte 28a und 29a, die in einem dreieckigen Loch 28b bzw. einem Schlitz 29b verschiebbar sind im Gestell 1.

Zum schnellen Vor- und Rücklauf sind zwei Tasten 31 und 32 vorgesehen. Über Tastenstangen 33 und 34 sind diese Tasten 31, 32 mit Schiebern 35, 36 verbunden. Diese Schieber 35 und 36 wirken auf den Bügel 26 ein. Dazu ist der Schieber 35 mit einem Ansatz 37 versehen, der Schieber 36 trägt entsprechend eine Auflauffläche 35. Der Ansatz 37 und die Auflauffläche 38 arbeiten auf einen Stift 39 des Bügels 26. Weiter sind die Schieber 35, 36 mit Auflaufflächen 35a, 35b bzw. 36a, 36b versehen, die auf Stifte 74c, 74d einer Kopfplatte 74 arbeiten (Fig. 1, 3, 4).

Wenn durch Eindrücken der Schnellspultaste 31 der Ansatz 37 gegen den Stift 39 des Bügels 26 drückt, kommt erst das Zahnrad 29 in Eingriff mit dem Zahnrad 13. Dabei macht der Stift 28a eine Bewegung in Richtung des Pfeiles b und der Stift 29a eine Bewegung in Richtung des Pfeiles c'. Bei weiterer Bewegung fährt der Stift 29a weiter in Richtung des Pfeiles b' und kommt das Zahnrad 29 auch in Eingriff mit dem Zahnrad 23. Das Magnetband wird jetzt mit dem Wickeldorn 21 schnell aufgewickelt. Wird die andere Schnellspultaste 32 eingedrückt, dann wirkt die Auflauffläche 38 auf den Stift 39 des Bügels 26 ein, wodurch der Stift 28a in Richtung des Pfeiles c und der Stift 29a in Richtung des Pfeiles c' fährt, wodurch das Zahnrad 29 mit dem Zahnrad 13 in Eingriff und das Zahnrad 28 mit dem Zahnrad 22 in Eingriff kommt. Dadurch wird der andere Wickeldorn 21 zum Schnellspulen angetrieben.

Wenn die Kopfplatte 74 in eine Spielstellung gelangt ist, nehmen die Stifte 74c, 74d eine der gestrichelten Lagen in Fig. 1 ein. Die Lagen stimmen überein mit den Lagen gemäß Fig. 3 bzw. 4. Das Eindrücken der Bedienungsstange 33 bzw. 34 hat jetzt zur Folge, daß über die Auflauffläche 35a, 35b bzw. 36a, 36b die Stifte 74c, 74d und damit die Kopfplatte 74 nach links geschoben werden, so daß ein Tonkopf 75 und Andruckrollen 78, 79 abgehoben werden von dem Magnetband.

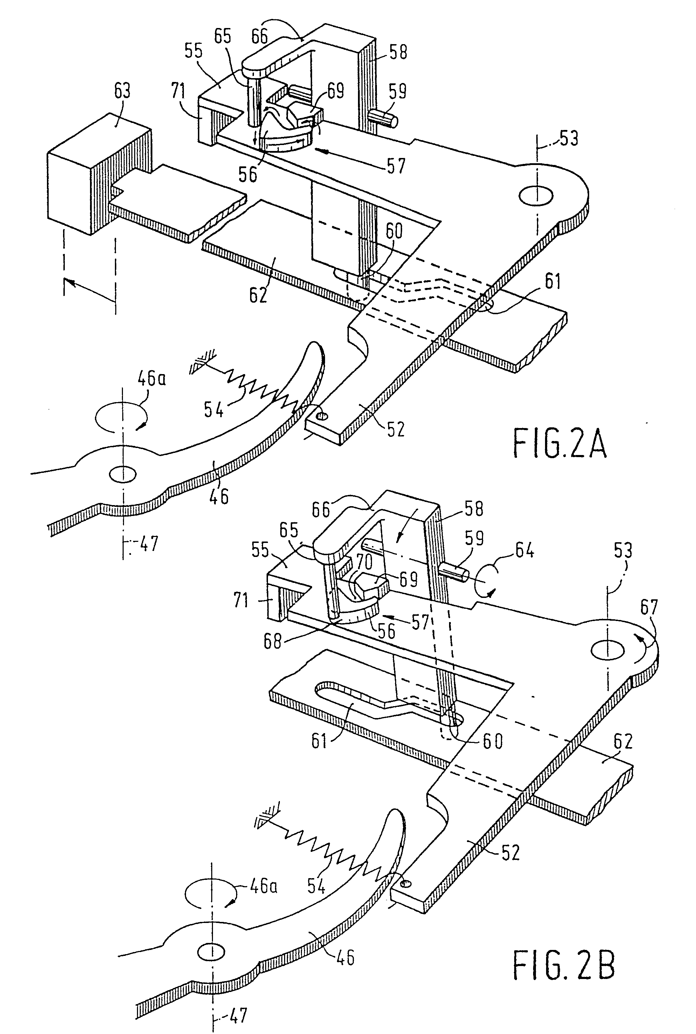

Ein Detektionsorgan 40, bestehend aus zwei Scheiben 41, 42 is und einer Verbindungsstange 43, ist über Rutschkupplungen mit den Wickeldornen 20, 21 verbunden. Auf der Scheibe 42 ist ein Stift 44 angeordnet, der innerhalb einer Schaltgabel 45 liegt. Die Schaltgabel 45 ist an einem Schaltelement 46 angeordnet, die um ein Lager 47 drehbar ist (vergl. auch Fig. 2A und 2B). Das Schaltrad 14 trägt in seiner Mitte erhaben vorstehend einen ein wenig ellipsenförmigen Nocken 48. Das Schaltelement 46 greift über das Schaltrad 14 und trägt einen Stift 49, der bei nach innen geschwenktem Schaltelement 46 um den Nocken 48 herumfahren kann bei Drehung des Schaltrades in Richtung eines Pfeiles 50. Um den Nocken 45 herum erstreckt sich in einem größeren Abstand eine erhaben aus dem Schaltrad 14 herausstehende, spiralförmige Steuerkurve 51. Auch diese Steuerkurve 51 kann mit dem Stift 49 an dem Schaltelement 46 zusammenwirken, und zwar immer dann, wenn das Detektionsorgan den Bandstillstand feststellt. In diesem Fall drückt der Stift 44 nicht mehr gegen die Schaltgabel 45, wodurch der Stift 49 . am Schaltelement 46 nicht mehr nach innen in Richtung auf den Nocken 45 belastet wird, sondern stehen bleibt und bei fortgehender Drehung des Schaltrades 14 in Richtung des Pfeiles 50 auf die Außenseite der Steuerkurve 51 gelangt. Weil die Steuerkurve 51 spiralförmig ist, wird das Schaltelement 46 im Uhrzeigersinn um sein Lager 47 verschwenkt, wodurch das Schaltelement 46 gegen ein Verbindungselement 52 gedrückt wird.

Das Verbindungselement 52 ist ein doppelarmiger Hebel, der um ein Lager 53 schwenkbar ist. Wie aus den schaubildlichen Darstellungen in Fig. 2A und 2B zu erkennen ist, ist das Verbindungselement 52 aufgrund der Wirkung einer Feder 54 im Uhrzeigersinn federbelastet. Damit spannt die Bewegung des Schaltelementes 46 die Feder 54.

Der von dem Angriffspunkt des Schaltelementes 46 abgewandte Hebelarm 55 des Verbindungselementes 52 trägt eine Herzkurve 56, die zu einem Rastmechanismus 57 gehört. Zu dem Rastmechanismus 57 gehört auch ein Rasthebel 58, der um eine Achse 59 verschwenkbar ist. Die Achse 59 liegt parallel zu der Oberfläche des Gestelles 1 und zu einer gedachten Verbindungslinie a zwischen den Tonwellen 9 und 10. Der Rasthebel 58 trägt auf der zur Herzkurve 56 gerichteten Seite einen Führungsstift 60, der in einem Führungsschlitz 61 in einer Stange 62 einer Stop/Auswurftaste 63 vorgesehen ist. Der Führungsschlitz 61 hat einen solchen Verlauf, daß der Rasthebel 58, wie sich aus Fig. 2B ergibt, bei ausgeschobener Stop/Auswurftaste um die Achse 59 in Richtung eines Pfeiles 64 verschwenkt wird. Das Nach-Außen-Schieben der Stop/Auswurftaste 63 bzw. der Stange 62 erfolgt auf nicht dargestellte Weise durch das Einschieben einer Magnetbandkassette in das Gerät. Fig. 2A zeigt die Stange 62 in der eingeschobenen Stellung, während die Fig. 2B die Stange 62 in ausgeschobener Stellung zeigt.

Der Rasthebel 58 trägt einen Raststift 65, der in die Herzkurve 56 einfahrbar ist und die Herzkurve umfahren kann. Die Umfahrbarkeit wird z. B. über ein Filmgelenk 66 herbeigeführt. In Fig. 2A liegt der Stift 65 oberhalb der Herzkurve 66, da die Stange 62 eingedrückt ist. In Fig. 2B, wo die Stange 52 ausgefahren ist, ist der Stift 65 in den Bereich der Herzkurve 56 hineingefahren. Damit kann der Stift 65 mit der Herzkurve 56 zusammenwirken, wenn das Schaltelement 46 das Verbindungselement 52, wie in der Darstellung nach Fig. 2B, entgegen dem Uhrzeigersinn in Richtung eines Pfeiles 67 verschwenkt wird. Bei diesem Verschwenken ist der Stift 65 an einer Seitenwand 68 der Herzkurve 56 entlang gelaufen. Ein Führungsnocken 69 sorgt dafür, daß der Stift 65 in eine Mulde 70 der Herzkurve 56 einfällt.

Am Hebelarm 55 ist ein Nocken 71 angeordnet. Dieser Nocken 71 wirkt, wie sich aus den Fig. 3 und 4 ergibt, mit einer Blattfeder 72 zusammen und erstreckt sich durch einen Längsschlitz 73 im Gestell 1 hindurch. Die Blattfeder 72 drückt mit ihren freien Enden gegen Halterungen 76, 77 die auf einer Kopfplatte 74 gelagert sind. Diese Kopfplatte 74 trägt in ihrer Mitte einen Tonkopf 75 und beiderseits des Tonkopfes 75 die Halterungen 76, 77, in denen Andruckrollen 78, 79 gelagert sind. Die Halterungen werden gegen Anschläge 74a, 74b der Kopfplatte 74 gedrückt.

Die Kopfplatte 74 hat abgewinkelte Enden 80, 81. Das abgewinkelte Ende 80 weist einen Schlitz 82 auf, in dem ein Stift 83 verschiebbar ist, der auf dem Schwenkarm 16 befestigt ist. Dadurch ist in der Stellung nach Fig. 3 der Schwenkarm 16 derart um die Achse 15 verschwenkt, daß das Schaltrad 14 kämmt mit dem Spielrad 25 und dem Zahnrad 12. Dementsprechend ist in Fig. 4 dargestellt, daß das abgewinkelte Ende 81 der Kopfplatte 74 den Schwenkarm 19 um die Schwenkachse 18 geschwenkt hat, wodurch das Zahnrad 17 mit dem Spielrad 24 und dem Zahnrad 11 kämmt. Dementsprechend ist in der Stellung nach Fig. 3 die Druckrolle 79 gegen die Tonwelle 10 gedrückt, während in der Stellung nach Fig. 4 die Andruckrolle 78 gegen die Tonwelle 9 gedrückt ist.

In der Kopfplatte 74 sind parallel zu der Verbindungslinie zwischen den Tonwellen 9, 10 Längsschlitze 84, 85 angeordnet, in denen Leitstifte 86, 87 verschiebbar sind.

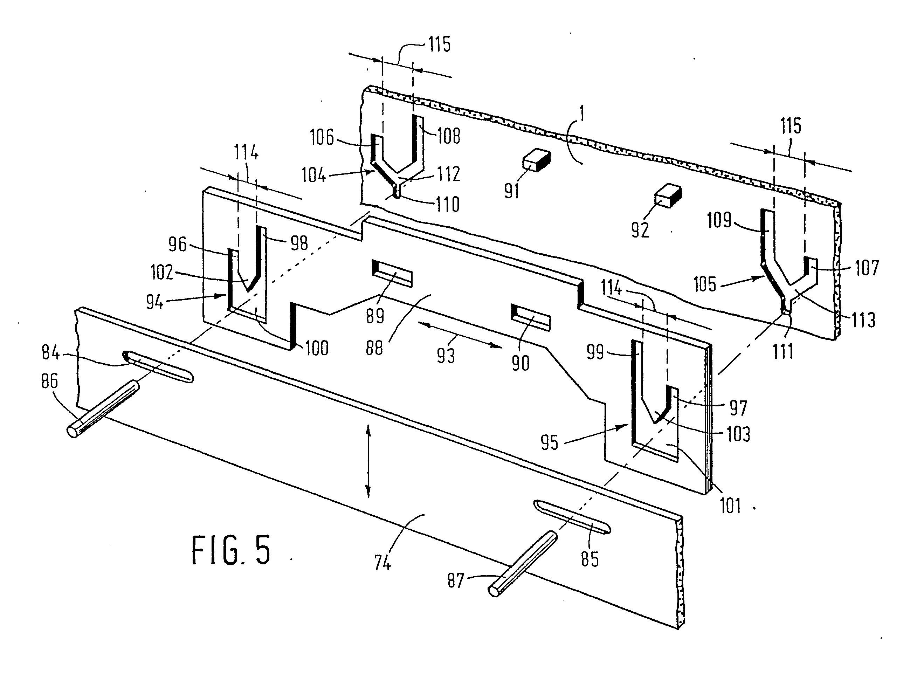

Fig. 5 zeigt anhand der Explosionsansicht in der Kopfplatte 74 geführte Leitstifte 86, 87, die in den Längsschlitzen 84, 85 geführt sind. Die Leitstifte sind damit parallel zu der Verbindungslinie a zwischen den Tonwellen verschiebbar. Die Halterung der Leitstifte 86, 87 an der Kopfplatte 74 ist in den Zeichnungen nicht näher dargestellt. Bei einer einfachen Ausführungsform sind die Leitstifte wie die Stifte von Reißnägeln an einer kappenförmigen Platte befestigt. Es ist aber ebensogut auch möglich, die Leitstifte an den freien Enden von federnden Zungen anzuordnen, die an der Kopfplatte 74 befestigt sind.

Zwischen der Kopfplatte 74 und der Chassisplatte an der Oberseite des Gestells 1 ist eine als Steuermittel dienende Steuerplatte 88 angeordnet. Diese Steuerplatte 88 ist mit Längsschlitzen 89, 90 versehen, durch die Führungsnocken 91, 92 der Chassisplatte hindurchgreifen. Dadurch ist die Steuerplatte 88 parallel zu der gedachten Verbindungslinie zwischen den Tonwellen 9, 10 verschiebbar. Die Verschiebbarkeit ist in Fig. 5 durch einen Doppelpfeil 93 angegeben.

Die Steuerplatte 88 ist an beiden Enden mit U-förmigen Schlitzen 94, 95 versehen. Von den U-förmigen Schlitzen 94 und 95 ist jeweils ein Schenkel 96, 97 kürzer und ein Schenkel 98, 99 länger ausgebildet. Die kürzeren Schenkel sind voneinander weg angeordnet und die längeren Schenkel dementsprechend aufeinander zu. Die Verbindungsbasis 100 und 101 zwischen den kürzeren und längeren Schenkeln ist stark verbreitert ausgebildet. Zwischen den längeren und kürzeren Schenkeln sind Materialzungen 102 und 103 ausgebilet, die an ihren zur Basis 100, 101 gerichteten Enden angespitzt sind.

In der Chassisplatte des Gestells 1 sind als Leitschlitzanordnungen dienende gabelförmige Leitschlitze 104 und 105 angeordnet mit zwei den Gabelzinken entsprechend Schenkeln, von denen jeweils einer 106, 107 kürzer als der andere 108, 109 ausgebildet sind. Am Gabelschaft ist ein mittiger Einlaufschlitz 110, 111 vorgesehen, der sich an den trichterförmigen Gabelfuß 112, 113 anschließt. Der gegenseitige Abstand 114 der Schenkel der U-förmigen Leitschlitze 94, 95 in der Steuerplatte 88 ist geringer als der gegenseitige Abstand 115 der Schenkel der gabelförmigen Leitschlitze 104, 105.

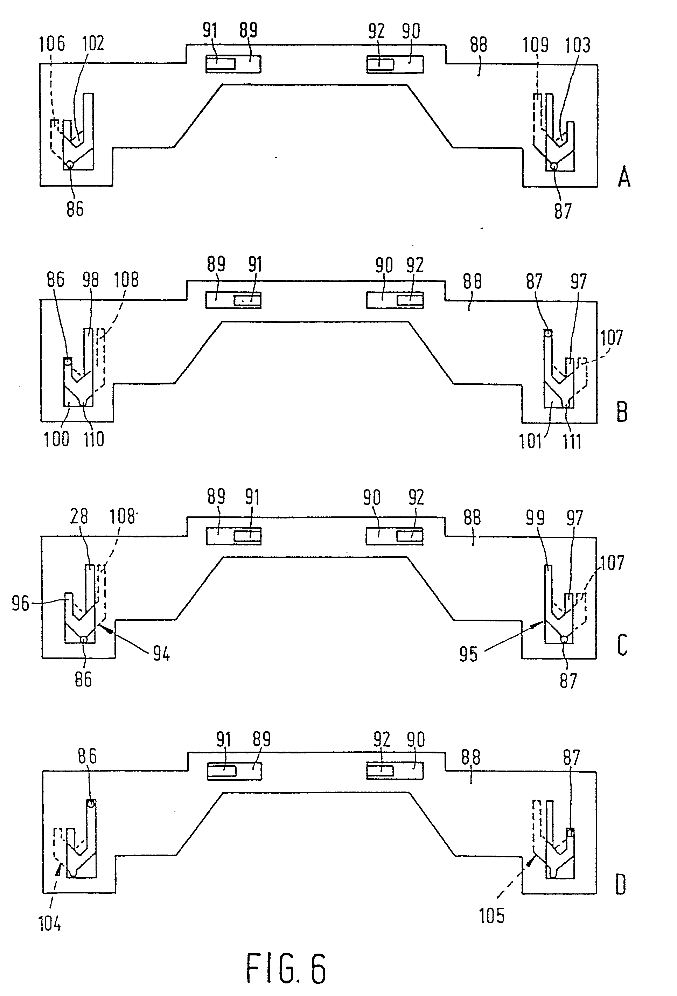

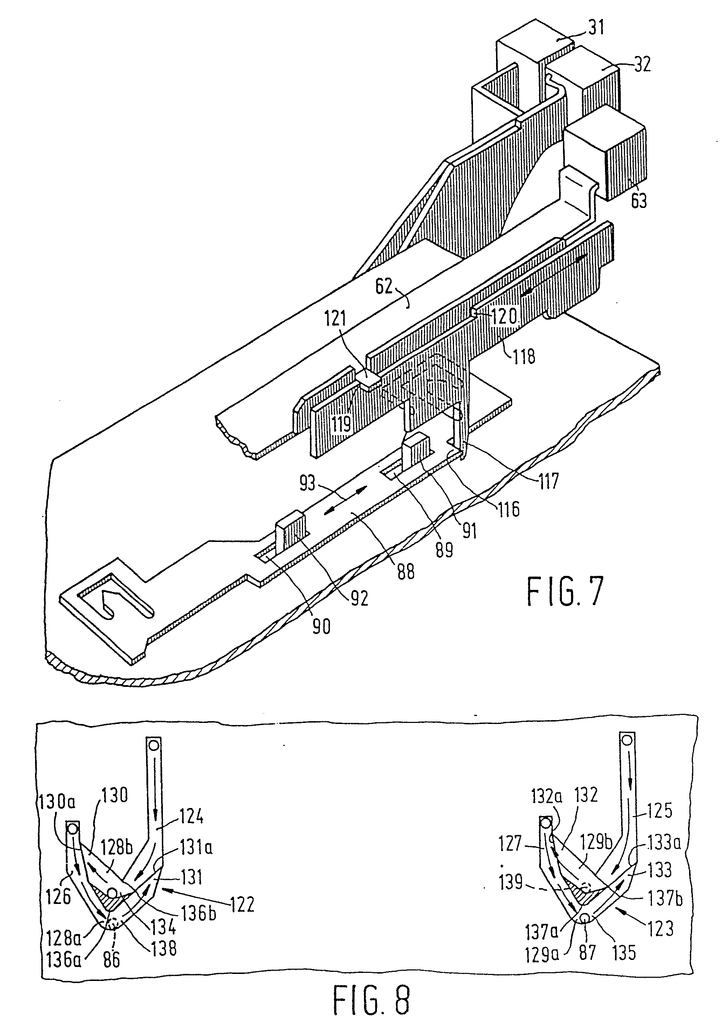

Fig. 7 zeigt anhand einer schaubildlichen Darstellung auf der Chassisplatte des Gestells 1 die Steuerplatte 88. Die Steuerplatte 88 ist mit einem Anschlag 116 versehen, gegen den eine Nase 117 eines Zwischenschiebers 118 stoßen kann, der parallel zu der gedachten Verbindungslinie a zwischen den Tonwellen 9 und 10 verschiebbar ist. Der Zwischenschieber 118 ist mit zwei Anschlägen 119, 120 versehen, zwischen die ein Mitnehmer 121 der auch als Auswerfer dienenden Stoptastenstange 62 drücken kann. Wenn die Stoptaste 63 mit ihrer Stange 62 ausgerückt ist, dann hat sie den Zwischenschieber 118 nach außen mitgenommen, weil der Mitnehmer 121 gegen den Anschlag 120 gestoßen ist. Dadurch ist die Nase 117 von dem Anschlag 116 abgerückt. Die Steuerplatte 88 ist damit ungehindert in Richtung des Doppelpfeiles 93 nach Fig. 5 und 7 verschiebbar. Wird die Stop/Auswurftaste 63 demgegenüber eingedrückt, denn stößt der Mitnehmer 121 gegen den Anschlag 119 und die Nase 117 gegen den Anschlag 116. Die Steuerplatte 88 ist damit in einer Vorzugslage nach Fig. 6B festgelegt.

Die Funktionsweise der Vorrichtung läßt sich wie folgt beschreiben: Wird eine Kassette eingelegt, dann fährt die Auswurftaste 63 aus der Stellung nach Fig. 2A in die Stellung nach Fig. 2B aus. Auf ebenfalls nicht dargestellte Weise wird der Schalter des Motors 3 geschlossen, und der Motor beginnt zu drehen. Damit drehen sich auch die Schwungscheiben 7 und 8, und zwar in gegensinniger Richtung. Gleichzeitig drehen sich die Zahnräder 11 und 12 und die mit ihnen kämmenden Zahnräder 14 und 17.

Durch das Ausfahren der Auswurfstange 62 schwenkt der Rasthebel 58 nach Fig. 2A um die Achse 59, und der Raststift 65 kommt in den Wirkbereich mit der Herzkurve 56 nach Fig. 2B.

Weil die Zahnräder 14 und 17 nicht in Eingriff sind mit den Zahnrädern 24 und 25, drehen die beiden Wickeldorne 20 und 21 nicht mit. Die Scheiben 41 und 42 sind über ihre separaten Reibungskupplungen mit den Wickeldornen 20, 21 verbunden und stehen damit auch still. Da beim Eindringen der Kassette ein Dremoment auf das Schaltelement 46 fehlt, weil die Bandwickel nicht umlaufen und das Band still steht, bleibt das Schaltelement 46 in der in Fig. 1 dargestellten Stellung stehen und kommt damit mit dem Stift 49 auf die Außenseite der Steuerkurve 41. Damit macht das Schaltelement 46 eine Bewegung im Uhrzeigersinn gemäß Pfeil 46a und schwenkt das Verbindungselement 52 entgegen dem Uhrzeigersinn (Pfeil 67). Weil der Rasthebel 58 geschwenkt ist und der Stift 65 der Herzkurve 56 im Wirkbereich ist, umläuft der Stift 65 nun die Wand 68 der Herzkurve 56 und fällt in die Mulde 70 ein. Damit ist das Verbindungselement in einer eingeschwenkten Stellung eingerastet (siehe Fig. 2B).

Durch das Schwenken des Verbindungselementes 52 entgegen dem Uhrzeigersinn in Richtung des Pfeiles 67 hat sich der Nocken 71 nach innen bewegt und gegen die Blattfeder 72 gedrückt. Die Blattfeder drückt ihrerseits über die Halterungen 76 und 77 gegen die Kopfplatte 74 und versucht, sie in Richtung auf die Tonwellen 9, 10 zu schieben. Nun kommt die Wirkung der Steuerplatte 88 zur Geltung.

Vor dem Einschwenken des Nockens 71 war die Kopfplatte 74 von den Tonwellen weggefahren. Die Leitstifte 86, 87 waren dadurch in die Einlaufschlitze 110 und 111 eingelaufen (vergl. Fig. 5). Die Steuerplatte 88 hat die aus Fig. 6A zu ersehende angenommene Stellung. Beim Vorfahren der Kopfplatte 74 in Richtung der Tonwellen 9, 10 fahren die Leitstifte 86, 87 nach vorn und laufen auf der linken Seite der Zungen 102, 103 auf und zugleich in die linken Schenkel 106 und 109 der gabelförmigen Leitschlitze 104, 105. Bei dem Einfahren der Leitstifte 86, 87 in die Schenkel 106 und 109 nehmen die Leitstifte 86, 87 die Steuerplatte 88 nach links mit, so daß sich nunmehr die Schenkel 96, 106 und 99, 109 überdecken. Der linke Leitstift 86 findet damit in dem kürzeren Schenkel beim Vorfahren einen Anschlag, während der rechte Leitstift 87 frei in Richtung auf die Tonwelle 10 vorlaufen kann (Fig. 6B). Damit schwenkt die vorgedrückte Kopfplatte 74 auf der rechten Seite derartig nach vorn, daß die rechte Andruckrolle 79 gegen die rechte Tonwelle 10 stößt. Die andere Tonwelle bleibt unbelastet. Damit läuft das Band in der aus Fig. 3 zu ersehenden Richtung.

Beim Erreichen des Bandendes bleibt das Band stehen. Dadurch wird das Schaltelement 46 mit seinem Stift 49 erneut nach außen im Uhrzeigersinn geschwenkt. Dadurch wird das Verbindungselement 52 erneut entgegen dem Uhrzeigersinn verschwenkt (Fig. 2B) in Richtung des Pfeiles 67. Das Verbindungselement 52 wird bei diesem Bewegen über den Normalhub, der bei der eingerasteten Lage vorliegt, in einem Überhub weitergeschwenkt. Der Überhub wird möglich, da der Nocken 71 gegen die Blattfeder 72 über die Hebel 76, 77 an der Kopfplatte 74 drückt und damit Ausweichspielraum in Richtung auf die Kopfplatte hat. Bei diesem Überhub fährt der Stift 65 aus der Mulde 70 heraus, und der Rastmechanismus 57 entrastet. Unter Wirkung der Feder 54 schwenkt das entrastete Verbindungselement 52 nun im Uhrzeigersinn, so daß der Nocken 71 nach außen fährt. In dieser Lage ist die Kopfplatte nach außen zurückgefahren, und die Leitstifte 86, 87 sind wieder in die Einlaufschlitze 110 und 111 eingelaufen. Die Steuerplatte 88 ist in ihrer alten Stellung verblieben. Die Zungen 102 und 103 liegen damit noch immer in einer nach links verschobenen Lage gegenüber der mittigen Lage der Einlaufschlitze 110 und 111 (Fig. 6C).

Es kommt nun der Reversiervorgang. Das Schaltrad 14 dreht nach wie vor weiter. Da sich die Kopfplatte 74 zurückgezogen hat, hat sie ihr umgebogenes Ende 80 auch nach außen gezogen und damit den Schwenkarm 16 derart verschwenkt, daß das Schaltrad 14 außer Eingriff ist vom Spielrad 25. Damit wird das Spielrad 25 nicht mehr angetrieben. Das Detektionsorgan 40 stellt Bandstillstand fest. Aufs Neue wird das Schaltelement 46 im Uhrzeigersinn verschwenkt. Das Schaltelement 46 drückt gegen das Verbindungselement 52 und schwenkt dieses erneut entgegen dem Uhrzeigersinn in Richtung des Pfeiles 67. Damit umfährt der Stift 65 erneut die Herzkurve 56, und der Stift fällt letztlich wieder in die Mulde 70 ein, und das Verbindungselement 52 verrastet. Der Nocken 71 ist nun wieder nach vorn geschoben, und die Kopfplatte 74 nimmt nach ihrem Vorfahren die aus Fig. 4 ersichtliche Stellung ein. Das Zahnrad 17 ist über das umgebogene Ende 81 der Kopfplatte 74 mit dem Zahnrad 11 und mit dem Spielrad 24 im Eingriff. In dieser Lage nach Fig. 4 liegt die Andruckrolle 78 an der Tonwelle 9 an, und das Band wird in entgegengesetzter Richtung transportiert.

Die Umkehrung der Bandtransportrichtung ist wieder durch die Leitschlitzanordnung bewirkt worden, die in Fig. 6 in verschiedenen Stellungen dargestellt ist. Die letzte beschriebene Stellung war die Stellung nach Fig. 6C. In dieser Stellung ist die Steuerplatte 88 nach links verschoben, und die Leitstifte 86, 87 liegen in den Einlaufschlitzen 110 und 111. Durch das erneute Vorfahren der Kopfplatte 74 sind die Leitstifte 86, 87 ebenfalls nach vorn gefahren und sind gegen die rechten Schrägflächen der angespitzten Zungen 102 und 103 gelaufen. Die Leitstifte 86, 87 wurden dadurch nach rechts verschoben und konnten weiter einfahren in die Schenkel 108 und 107. Die Querverschiebung der Leitstifte 86, 87 ist möglich durch das Verrutschen der Leitstifte 86, 87 in den Längsschlitzen 84, 85. Bei dem Einfahren in die Schenkel 107 und 108 haben die Leitstifte 86, 87 die Steuerplatte 88 nach rechts mitgenommen, so daß sich nunmehr die Schenkel 108 und 98 sowie 107 und 97 überdecken. Damit haben sich die Zungen 102, 103 wieder so versetzt, daß bei einem erneuten Zurückfahren und Vorfahren der Leitstifte diese dann wieder auf die linken Schrägflächen der angespitzten Zungen 102 und 103 auflaufen können. Die Stellung der Leitschlitzanordnung in diesem Fall ist aus Fig. 6D zu ersehen. Der Leitstift 87 hat in den kürzeren Schenkeln 107 und 97 auf seinem Vorfahrweg einen Anschlag vorgefunden, der die Kopfplatte 74 daran hindert, auf der rechten Seite weiter vorzufahren. Auf der linken Seite hat der Leitstift 86 keinen Anschlag vorgefunden, und er konnte in den Schenkeln 108 und 98 so weit vorfahren, daß die Feder 72 die linke Seite der Kopfplatte 74 die Andruckrolle 78 gegen die Tonwelle 9 drücken konnte. Diese Stellung ist aus Fig. 4 zu ersehen.

In Fig. 8 ist eine abgewandelte Ausführungsform der Leitschlitzanordnung und der Steuermittel dargestellt. Die Leitschlitzanordnung besteht aus U-förmigen Rinnen 122, 123, die an der Chassisplatte des Gestells 1 vorgesehen sind. Die U-förmigen Rinnen wirken wieder mit den Leitstiften 86, 87 zusammen. Die U-förmigen Rinnen 122 und 123 haben, wie bei der Ausführungsform nach den Fig. 5 und 6, lange Schenkel 124, 125 und kurze Schenkel 126, 127. Die verbindende Basis zwischen den jeweiligen Schenkeln ist als Doppelrinne 128a, 128b und 129a, 129b ausgebildet. Im Bereich dieser Doppelrinnen 128 und 129 sind als Steuermittel wirkende Führungsflächen 130 und 131 sowie 132 und 133 vorgesehen. Die Führungsflächen 130 bis 133 sind als schräge Auflaufflächen ausgebildet, die sich aus dem Rinnenboden langsam erheben, bis sie an Leitkonturen 130a, 131a, 132a und 133a enden. Diese Führungskonturen gehören ebenfalls zu den Steuermitteln für die Leitstifte 86 und 87.

Die Funktion der Leitschlitzanordnungen und Steuermittel nach Fig. 8 lassen sich wie folgt beschreiben: Es sei angenommen, daß die Kopfplatte 74 zurückgezogen ist. In dieser Ausgangslage liegt der Leitstift 86 in einer Mulde 134 der oberen Doppelrinne 128b. Der Leitstift 87 liegt in einer Mulde 135 der unteren Doppelrinne 129a. Oberhalb der Leitstifte sind Rinnenwände mit Leitpunkten 137a und 136b versehen. Diese Leitpunkte sind gegenüber den Mitten der Leitstifte 86, 87 an der unteren Rinne nach links und an der oberen Rinne nach rechts versetzt. Damit können die Leitstifte, wenn die Kopfplatte 74 erneut eingedrückt wird, in der oberen Rinne nur nach links auf die Führungsfläche 130 und aus der unteren Rinne nur in Richtung auf die Führungsfläche 133 nach rechts vorfahren. Das bedeutet, daß bei diesem Vorfahrvorgang der Leitstift 86 in den kürzeren Schenkel 126 und der Leitstift 87 in den längeren Schenkel 125 einfährt. Der Leitstift 86 erfährt also beim Vorfahren nach einem kürzeren Vorfahrweg einen Anschlag, während der Leitstift 87 frei vorfahren kann. Das entspricht der Stellung der Kopfplatte 74 nach Fig. 3. Wird die Kopfplatte 74 erneut zurückgefahren, dann läuft der Leitstift 86 durch den Schenkel 126 in die untere Rinne 128a und der Leitstift 87 in die obere Rinne 129b ein. In der ganz zurückgefahrenen Stellung liegt damit der Leitstift 86 in einer Mulde 139 (gestrichelte Lage in Fig. 8) und der Leitstift 87 in einer Mulde 139. Wird die Kopfplatte nun erneut in Richtung auf die Tonwellen vorgefahren, dann läuft der Leitstift 86 in Richtung auf die Führungsfläche 131 in den langen Schenkel 124 ein. Der Leitstift 87 läuft in Richtung auf die Führungsfläche 132 in den kurzen Schenkel 127 ein. Das bedeutet, daß der Leitstift 87 in diesem Fall in den kurzen Schenkel 127 einen verkürzten Vorfahrweg mit einem Anschlag vorfindet, während der Leitstift 86 frei in dem Schenkel 124 vorfahren kann. Die Kopfplatte erfährt damit eine Stellung, die aus Fig. 4 zu ersehen ist. Beim erneuten Zurückfahren der Kopfplatte 84 laufen die Leitstifte 86 und 87 wieder in die zuerst beschriebene Ausgangslage ein.

Der Vorteil dieser Leitschlitzanordnung besteht darin, daß keine beweglichen Teile zum Steuern der Verfahrbahnen der Leitstifte erforderlich sind. Die Rinnen und Führungsflächen sowie Führungskonturen lassen sich an der Chassisplatte in Kunststoff spritzen.

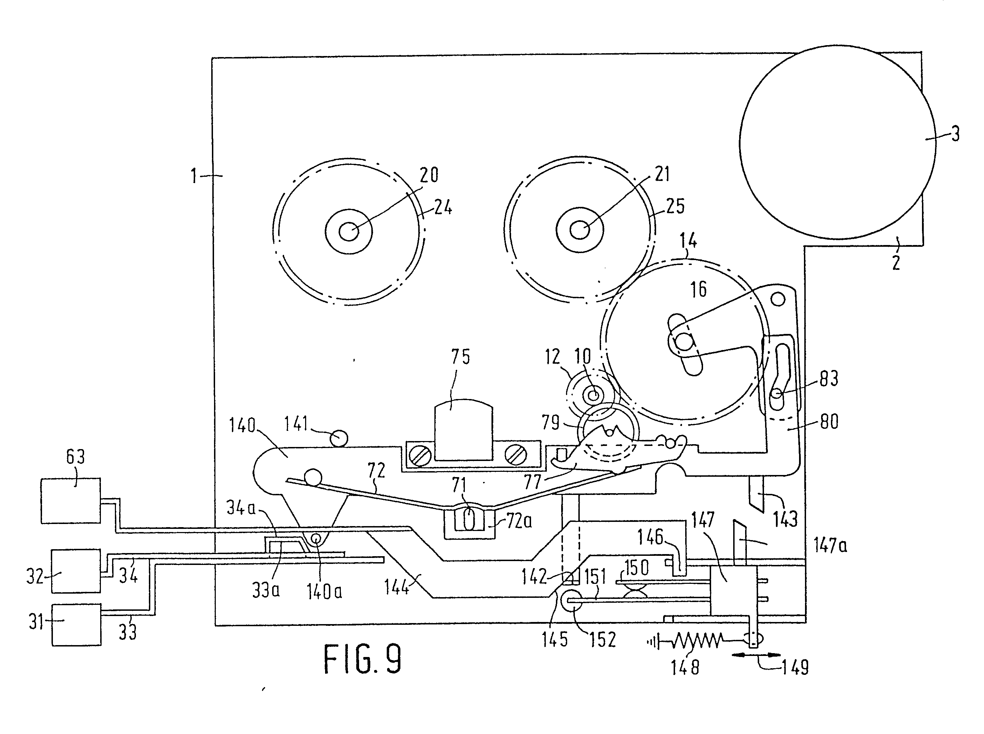

Fig. 9 zeigt eine abgewandelte Ausführungsform des Magnetbandkassettengerätes mit seinem Gestell 1 und dem am Gestell 1 mit Hilfe einer Motorstütze 2 befestigten Motor 3. In dieser Zeichnung sind nur die für die Funktion der abgewandelten Form maßgeblichen Bauteile dagestellt. Der wesentliche Unterschied der abgewandelten Ausführungsform besteht darin, daß eine Kopfplatte 140 nur eine Andruckrolle 79 trägt, die mit einer ihr zugeordneten Tonwelle 10 zusammenwirkt. Die andere, in den übrigen Figuren enthaltene Andruckrolle ist ebenso entfernt wie die zweite Tonwelle. Beim Antrieb fehlen das Zahnrad 17 und der dieses Zahnrad tragende Schwenkarm 19. Weiterhin fehlen die in den übrigen Figuren enthaltenen Leitschlitzanordnungen und Steuermittel zum Umsteuern der Bandtransportrichtung. Als Ersatz für die Andruckrolle 78, die an der Tonwelle 9 bisher einen Anschlag fand, tritt nun ein fester, am Chassis vorgesehener Anschlag 141, gegen welchen die Kopfplatte 140 auflaufen kann. An der Kopfplatte 140 ist ein Schaltstück 142 vorgesehen, das von der Tonwelle 10 weg weist. Weiterhin trägt die Kopfplatte 140 einen Nocken 143, der ebenfalls von der Tonwelle 10 weg weist.

Die Stoptaste 63 ist mit einer Stoptastenstange 144 versehen, die mit einer Absatzschräge 145 versehen ist und einem Nocken 146. An dem Gestell 1 ist ein Schalter 147 entgegen der Fedekraft einer Feder 148 in Verschieberichtung der Tastenstange 144 verschieblich gelagert entsprechend einem Doppelpfeil 149. Die Feder 148 zieht den Schalter 147, wenn er nicht von einem anderen Teil beaufschlagt wird, ein Stück in Richtung auf die Taste 63 vor bis zu einem nicht dargestellten Anschlag im Gestell 1. Der Schalter trägt zwei Federkontakte 150, 151, die, wenn von außen keine Belastung auf den Schalter ausgeübt wird, den Motorstromkreis schließen. Der Schaltkontakt 151 trägt noch einen Noppen 152, der von der Tastenstange 144 und von der Kopfplatte 140 von dem Schaltkontakt 150 abgehoben werden kann.

Beim Spielbetrieb (dargestellt in Fig. 9) ist die Auswurftastenstange 144 ausgefahren. Das bedeutet, daß der Noppen 152 nicht berührt ist und die Kontakte 150, 151 den Stromkreis des Motors 3 schließen. In dieser Betriebsstellung ist die Kopfplatte 140 mittels des Verbindungselementes 52 und dessen Nocken 71 in Richtung auf die Andruckrolle 10 und den Anschlag 141 verschoben. Der Spielbetrieb läuft.

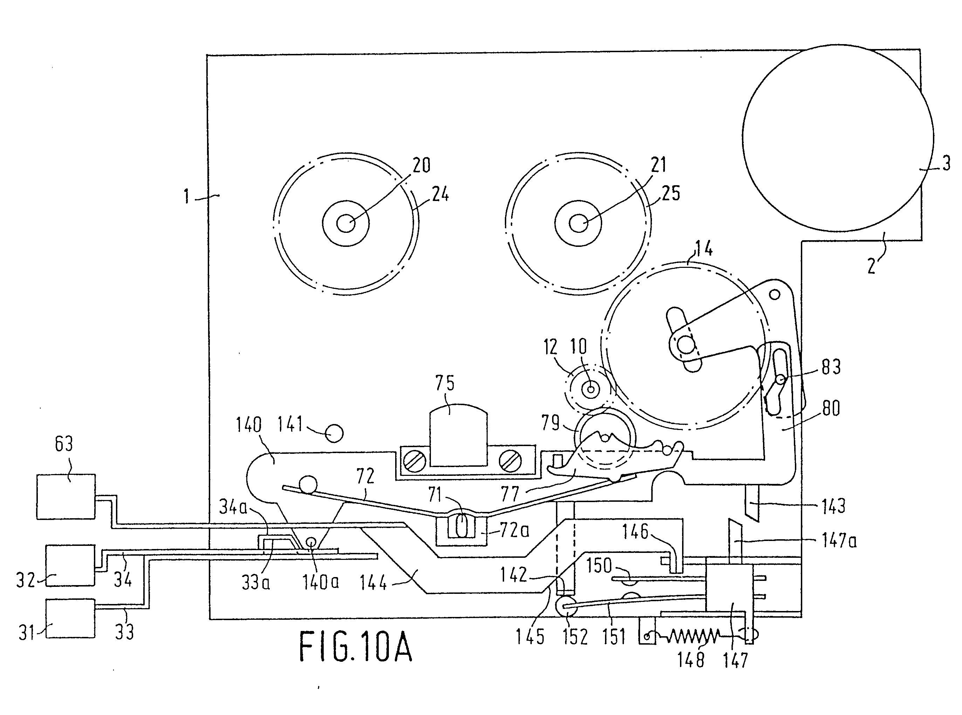

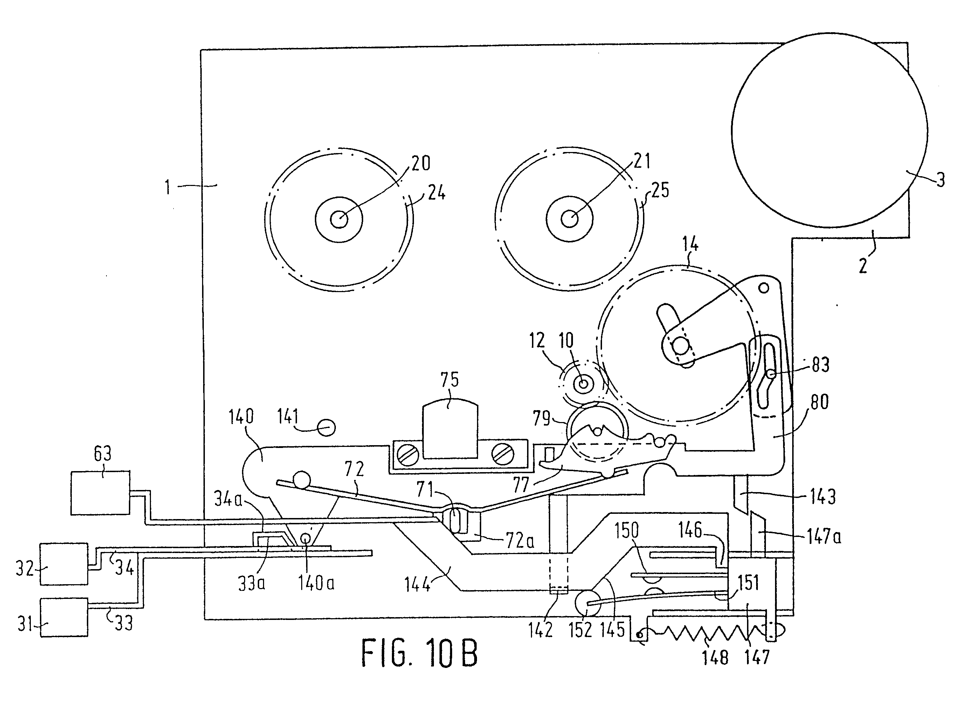

Ist das Band abgelaufen oder wird es nach Wunsch gestoppt, dann wird das Verbindungselement 52 entrastet, und der Nocken 71 fährt nach außen. Damit wird die Kopfplatte 140 entlastet, und die Feder 54 zieht die Kopfplatte 140 über den Bügel 72a nach außen. Das Schaltstück 142 stößt dabei gegen den Noppen 152 und drückt die Kontakte 150, 151 auseinander (siehe Fig. 10A). Der Stromkreis des Motors wird damit geöffnet, und der Antrieb stoppt. Das Gerät ist nun abgestellt. Will man die eingeschobene und abgespielte Kassette aus dem Gerät herausnehmen, dann muß die Stoptaste 63 gedrückt werden. Über die Stoptastenstange 144 wird dann mit Hilfe eines nicht dargestellten Auswerfmechanismus die Kassette aus dem Laufwerk herausgedrückt. Die Stoptastenstange 144 hat sich dabei aus der Stellung in Fig. 10A verschoben in die Stellung nach Fig. 10B. Das bedeutet, daß der Nocken 146 an der Tastenstange 144 gegen den Schalter 147 stößt und diesen entgegen der Kraft der Feder 148 auf ihrem Verschiebeweg mitnimmt. Die Schräge 145 an der Tastenstange 144 übernimmt beim Eindrücken der Taste 63 die Funktion des Schaltstückes 142 für das Offenhalten des Schalters 147. Damit hat die Kopfplatte keinen Einfluß mehr auf die Schaltkontakte 150, 151. In der verschobenen Lage wird der Schalter 147 über einen Nocken 147a mit Hilfe des Nockens 143 festgehalten, auch dann noch, wenn die Stoptastenstange 144 bereits wieder ausgefahren ist beim erneuten Einbringen einer Kassette. Beim Ausfahren der Stoptastenstange 144 hat die Schräge 145 jedoch den Noppen 152 freigegeben, so daß die Kontakte 150, 151 wieder geschlossen werden und damit der Motorstromkreis geschlossen ist. Nun beginnt wieder der Verstellmechanismus für die Kopfplatte. Das Verbindungselement 52 wird in Richtung des Pfeiles 67 nach Fig. 2B verstellt, und das Verbindungselement 52 rastet in den Rastmechanismus 57 mit dem Stift 65 ein. Die nunmehr wieder eingefahrene Kopfplatte 140 hat mit dem Wegfahren des Nockens 143 den Schalter 147 wieder freigegeben, der nun aufgrund der Federkraft 146 in seine Ausgangsstellung nach Fig. 10A zurückfahren kann. Damit wird erreicht, daß der Rastmechanismus 57 bei Bandstillstand einwandfrei arbeiten kann.

Soll der Spielbetrieb wieder aufgenommen werden, ohne daß die Kassette zuvor ausgeworfen wurde, ist dies möglich durch kurzes Eindrücken einer der beiden Schnellspultasten 31, 32. Um dies zu ermöglichen, tragen die Tastenstangen 33, 34 Auflaufflächen 33a, 34a, die gegen einen Stift 140a der Kopfplatte 140 drücken und diese derart in Richtung auf die Kassette verschieben, daß die Schaltkontakte 150, 151 sich schließen. Nun setzt sich wieder der Verstellmechanismus für die Kopfplatte 140 in Bewegung.

**Patentansprüche**

1. Schaltvorrichtung für ein Magnetbandkassettengerät für das Überleiten von einer Betriebsfunktion in eine andere bei Bandstillstand mit einer zur Kassette hin verstellbaren Kopfplatte (74) und einem Schaltmechanismus, bestehend aus
   - einem bei eingeschaltetem Gerät ständig angetriebenen Schaltrad (14), das ein Schaltelement (46) steuert,
   - einem Detektionsorgan (40), welches mit wenigstens einem Wickeldorn (20; 21) gekuppelt ist und die Lage des Schaltelementes am Schaltrad bei Bandlauf steuert,
   - einer Steuerkurve (51) auf dem Schaltrad (14) diese bei Bandstillstand das Schaltelement (46) verstellt, und
   - einem Verbindungselement (52), das vom Schaltelement (46) bei Bandstillstand immer in der gleichen Richtung verstellt wird zum Überführen des Gerätes in eine andere Betriebsfunktion,
   dadurch gekennzeichnet, daß

   - das Verbindungselement (52) mit der Kopfplatte (74) kuppelbar (über 55, 71, 72, 76, 77 in Fig. 3) ist zum Verstellen der Kopfplatte (74),
   - ein Rastmechanismus (57) die Kopfplatte (74) in wenigstens einer auf die Kassette verstellten Lage verrastet,
   - das Verbindungselement (52) beim vom Schaltelement (46) gesteuerten erneuten Verstellen den gerasteten Rastmechanismus (57) entrastet und
   - durch das Entrasten die Kopfplatte (74) aus der auf die Kassette verstellten Stellung zurückfährt.

2. Schaltvorrichtung nach Anspruch 1, dadurch gekennzeichnet, daß das Verbindungselement (52) federnd elastisch (72) auf die Kopfplatte (74) einwirkt und damit beim aufs Neue Verstellen in einem Überhub aus der gerasteten Stellung in Richtung auf die vorgefahrene Kopfplatte (74) weiter vorfahrbar ist und dabei im Rastmechanismus (57) entrastet.

3. Schaltvorrichtung nach Anspruch 2, dadurch gekennzeichnet, daß der Rastmechanismus aus einer Herzkurve (56), einem Führungsnocken (69) gegenüber der Herzmulde (70) und einem die Herzkurve (56) abfahrenden Stift (65) besteht, wobei die Herzkurve (56) und der Führungsnocken (69) an dem Verbindungselement (52) angeordnet sind und der Stift (65) derart gegenüber dem Gestell (1) gelagert ist, daß er einerseits in der Ebene der Herzkurve (56) bewegbar ist und andererseits aus dem Eingriffsbereich mit der Herzkurve (56) herausfahrbar ist.

4. Schaltvorrichtung nach Anspruch 3, dadurch gekennzeichnet, daß ein Rasthebel (58) am Gestell (1) schwenkbar gelagert ist und einen weiteren Stift (60) trägt, der in einer Steuerkulisse (61) einer Stoptastenstange (62) vorgesehen und über die Steuerkulisse (61) verschwenkt wird, wodurch der erste Stift (65) aus dem Wirkbereich mit der Herzkurve (56) herausschwenkt.

5. Schaltvorrichtung nach den Ansprüchen 1 bis 4, dadurch gekennzeichnet, daß
   - ein elektrischer Ein/Ausschalter (147) für Antrieb des Laufwerkes im Gestell (1) entgegen Federkraft (148) verschiebbar gelagert ist,
   - auf der Stoptastenstange (144) und der Kopfplatte (140) Schaltstücke (142, 145) vorgesehen sind, die die Kontakte (150, 151) des Schalters (147) zum Öffnen des Stromkreises auseinanderdrücken, wenn die Stoptastenstange (144) eingefahren wird und/oder wenn die Kopfplatte (140) von der Kassette weg zurückgefahren wird,
   - die Stoptastenstange (144) einen Nocken (146) trägt, der bei ihrem Einschieben den Schalter (147) in Einschubrichtung verschiebt, und zwar derart, daß die Kontakte (150, 151) des Schalters (147) aus dem Wirkungsbereich des Schaltstückes (147) der Kopfplatte (140) herausgekommen sind, und
   - die Kopfplatte (140) einen Nocken (143) aufweist, der bei zurückgeschobenem Schalter (147) und zurückgefahrener Kopfplatte (140) den Schalter (147) in seiner verschobenen Stellung festhält, bis die Kopfplatte (140) wieder vorfährt.

6. Schaltvorrichtung nach Anspruch 5, dadurch gekennzeichnet, daß eine Stange (33, 34) wenigstens einer Schnellspultaste (31, 32) mit den Kontakten (150, 151) des Schalters (147) kuppelbar ist zum Schließen der Kontakte (150, 151).

**Claims**

1. A switching device for a magnetic-tape-cassette apparatus for switching from one operating function to another during tape stoppage, which device comprises a head-mounting plate (74) which can be moved towards the cassette and a switching mechanism which comprises
- a switching wheel (14), which is driven continuously during operation of the apparatus and which actuates a switching member (46),
- a detection means (40), which is coupled to at least one winding spindle (20; 21) and which controls the position of the switching member on the switching wheel during tape transport,
- a guideway (51) on the switching wheel (14), which actuates the switching member (46) during tape stoppage, and
- a connecting member (52), which during tape stoppage is always moved in the same direction by the switching member (46) for switching the apparatus to another operating function,
   characterized in that
- the connecting member (52) can be coupled to the head-mounting plate (74) (via 55, 71, 72, 76, 77 in Fig. 3) for positioning the head-mounting plate (74),
- a latching mechanism (57) latches the head-mounting plate (74) in at least one position in which it is advanced towards the cassette,
- the connecting member (52) releases the latched latching mechanism (57) when said member is actuated again under control of the switching member (46), and
- as a result of the release moves the head-mounting plate (74) out of the position in which it is advanced towards the cassette.

2. A switching device as claimed in Claim 1, characterized in that the connecting member (52) co-operates elastically with the head-mounting plate (74) under spring load (72) and thus, when actuated again, can he moved further with overtravel out of the latched position towards the advanced head-mounting plate (74) and is then released hy the latching mechanism (57).

3. A switching device as claimed in Claim 2, characterized in that the latching mechanism comprises a heart-shaped projection (56), a guide member (69) situated opposite the heart-shaped recess (70), and a pin (65) which co-operates with the heart-shaped projection (56), the heart-shaped projection (56) and the guide member (69) being arranged on the connecting member (52) and the pin (65) being so supported relative to the frame (1) that it can move in the plane the heart-shaped projection (56) and can be moved out of the area of engagement with the heart-shaped projection (56).

4. A switching device as claimed in Claim 3, characterized in that a latching lever (58) is pivotally arranged on the frame (1) and carries a further pin (60), which engages in a guide slot (61) formed in a stop-button rod (62) and which is pivoted via the guide slot (61), causing the first pin (65) to be moved out of the area of engagement with the heart-shaped projection (56).

5. A switching device as claimed in Claims 1 to 4, characterized in that
- an electrical on/off switch (147) for the drive of the tape transport is mounted on the frame (1) so as to be movable against spring force (148),
- the stop-button rod (144) and the head-mounting plate (140) are provided with switching limbs (142, 145) which urge the contacts (150, 151) of the switch (147) apart to open the circuit when the stop-button rod (144) is moved inwards and/or when the head-mounting plate (140) is moved back away from the cassette,
- the stop-button rod (144) carries a projection (146) which, when said rod is moved inwards, shifts the switch (147) in the inward direction in such a way that the contacts (150, 151) of the switch (147) are situated outside the area in which they can be actuated by the switching limb (147) of the head-mounting plate (140), and
- the head-mounting plate (140) carries a projection (143) which, in a shifted-back position of the switch (147) and in a retracted position of the head-mounting plate (140), retains the switch (147) in its shifted position until the head-mounting plate (140) is advanced again.

6. A switching device as claimed in Claim 5, characterized in that an actuating rod (33, 34) of at least one fastwind button (31, 32) can be coupled to the contacts (150, 151) of the switch (147) to the contacts (150, 151).

**Revendications**

1. Dispositif de commutation pour un appareil à cassette de bande magnétique pour passer d'une fonction de service à une autre lorsque la bande est immobilisée, comportant une plaque porte-tête (74) déplaçable en direction de la cassette et un mécanisme de commutation, constitué par:
- une roue de commutation (14) entraînée de manière continue lorsque l'appareil est enclenché, qui commande un élément de commutation (46),
- un organe de détection (40), qui est couplé à au moins un mandrin de bobinage (20, 21) et qui régit la position de l'élément de commutation sur la roue de commutation lorsque la bande défile,
- une came de commande (51) sur la roue de commutation (14), qui déplace l'élément de commutation (46) lorsque la bande est immobilisée, et

- un élément de liaison (52) qui est déplacé par l'élément de commutation, toujours dans le même sens, lorsque la bande est immobilisée, pour faire passer l'appareil à une autre fonction de service,

caractérisé en ce que

- l'élément de liaison (52) peut être couplé à la plaque porte-tête (74) (par l'intermédiaire de 55, 71, 72, 76, 77 sur la Fig. 3) pour déplacer cette plaque porte-tête (72),

- un mécanisme à déclic (57) verrouille la plaque porte-tête (74) dans au moins une position déplacée sur la cassette,

- lors d'un nouveau déplacement commandé par l'élément de commutation (46), l'élément de liaison (52) déverrouille le mécanisme à déclic (57) verrouillé, et

- du fait du déverrouillage, la plaque porte-tête revient à partir de la position déplacée sur la cassette.

2. Dispositif de commutation suivant la revendication 1, caractérisé en ce que l'élément de liaison (52) agit élastiquement à la manière d'un ressort (72) sur la plaque porte-tête (74) et peut ainsi, lors d'un nouveau déplacement, par un dépassement de course, être avancé davantage à partir de la position verrouillée en direction de la plaque porte-tête (74) avancée en déverrouillant le mécanisme à déclic (57).

3. Dispositif de commutation suivant la revendication 2, caractérisé en ce que le mécanisme à déclic est constitué d'une came cardioïde (56), d'une contre-came (69) opposée au creux (70) de la came cardioïde et d'un doigt (65) qui suit la came cardioïde (56), auquel cas la came cardioïde (56) et la contre-came (69) sont montées sur l'élément de liaison (52) et le doigt (65) est monté par rapport au bâti (1) d'une manière telle que d'une part, il puisse être déplacé dans le plan de la came cardioïde (56) et que, d'autre part, il puisse être écarté hors de contact d'avec la came cardioïde.

4. Dispositif de commutation suivant la revendication 3, caractérisé en ce qu'un levier à déclic (58) est monté pivotant sur le bâti (1) et porte un autre doigt (60) qui est prévu dans une coulisse de commande (61) d'une tige de touche d'arrêt (62) et pivote par l'intermédiaire de la coulisse de commande (61), de sorte que le premier doigt (65) pivote hors de la zone de coopération avec la came cardioïde (56).

5. Dispositif de commutation suivant les revendications 1 à 4, caractérisé en ce que

- un commutateur d'enclenchement/déclenchement électrique (147) est monté déplaçable à l'encontre d'une force de ressort (148) pour entraîner le mécanisme dans le bâti (1),

- sur la tige de touche d'arrêt (144) et la plaque porte-tête (140) sont prévus des organes de commutation (142, 145) qui écartent les contacts (150, 151) du commutateur (147) pour ouvrir le circuit, lorsque la tige de touche d'arrêt est enfoncée et/ou lorsque la plaque porte-tête (140) est amenée à l'écart de la cassette,

- la tige de touche d'arrêt (144) porte une saillie (146) qui, lorsqu'elle est enfoncée, déplace le commutateur (147) dans le sens de l'enfoncement, et ce d'une manière telle que les contacts (150, 151) du commutateur (147) soient écartés de la zone d'action de l'organe de commutation (147) de la plaque porte-tête (140), et

- la plaque porte-tête (140) présente une saillie (143) qui, lorsque le commutateur (147) a été rétracté et que la plaque porte-tête (140) a été écartée, maintient le commutateur (147) dans sa position déplacée, jusqu'à ce que la plaque porte-tête (140) avance à nouveau.

6. Dispositif de commutation suivant la revendication 5, caractérisé en ce qu'une tige (33, 34) d'au moins une touche de bobinage rapide (31, 32) peut être couplée aux contacts (150, 151) du commutateur (147) pour fermer les contacts (150, 151).

FIG.1

FIG.2A

FIG.2B

3

FIG. 3

0 121 282

FIG. 4

0 121 282

FIG. 5

FIG. 6

FIG. 7

FIG. 8

FIG. 9

0 121 282

FIG.10A

0 121 282

FIG. 10 B